Europäisches Patentamt

European Patent Office

Office européen des brevets

(11) Numéro de publication: **0 437 828 A2**

## DEMANDE DE BREVET EUROPEEN

(21) Numéro de dépôt: 90125391.4

(22) Date de dépôt: 23.12.90

(51) Int. Cl.⁵: **B60Q 7/00**

(30) Priorité: 03.01.90 CH 15/90

(43) Date de publication de la demande:
24.07.91 Bulletin 91/30

(84) Etats contractants désignés:
AT BE CH DE DK ES FR GB IT LI LU NL SE

(71) Demandeur: Beretta, Armido

CH-6716 Acquarossa(CH)

(72) Inventeur: Vescovi, Giuseppe
//
CH-6716 Acquarossa(CH)

(54) **Triangle de signalisation pour véhicules avec étui.**

(57) Il s'agit d'un nouveau triangle de signalisation pour véhicules réalisé sur la base d'une nouvelle idée de forme et de composition dans le but de réduire l'espace d'occupation lorsqu'il est placé à l'intérieur de la voiture; ce triangle permet aussi un montage plus facile par rapport à ceux qui existent actuellement sur le marché.

Ce triangle est composé de trois parts à forme d'angle (P), qui sont reliées à leurs extrémités de façon à en permettre la rotation; ces pars ouvertes forment le triangle, dont la grandeur est celle qui est normalement requise avec le côtés de 45 cm, tandis que repliées et fermées elles se réduisent à une surface d'un tiers (fig. 4).

Fig 4.

La présente invention se rapporte à un triangle de signalisation pour véhicules, qui se fonde sur un système de montage nouveau: cfr. la définition contenue dans la revendication; il se différencie ainsi des triangles actuels qui sont composés moyennant le montage de trois barres droites de 45 cm chacune: celles-ci sont unies à leurs estrémités pour former le dit triangle.

D'après une forme particulière d'exécution de l'invention le triangle se compose de trois angles superposés qui enlevés de l'étui son tournés sur soi-mêmes par le biais d'un pivot tournant et qui forment ainsi le triangle de service, lequel à sa fois est appuyé sur le sol par un soutien. Le dessein ci-joint montre une forme d'exécution du triangle qui sert d'exemple pour illustrer le foncionnement de celui-ci d'après l'invention.

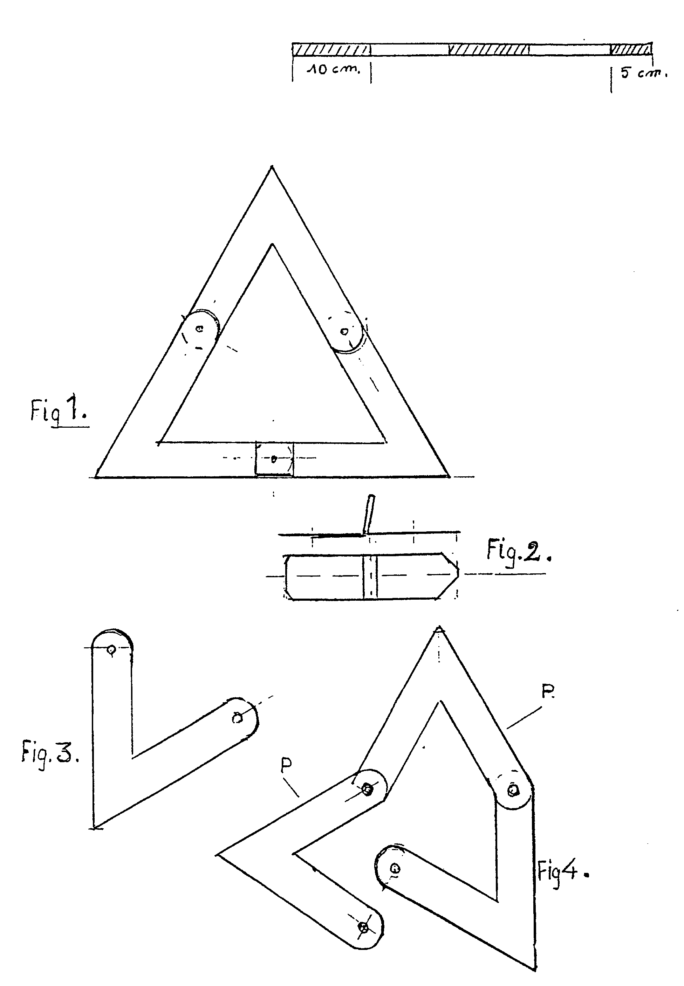

Figure     1. Triangle complet
               2. Soutien du triangle
               3. Angle qui compose le triangle
               4. Triangle décomposé

Le triangle peut être construi en métal tout comme en plastique.

## Revendications

1. Triangle de signalisation pour véhicules avec étui, dont la caractéristique réside dans le fait qu'il est composé par trois secteurs, dont chacun définit un angle; ces secteurs composés ensemble forment le triangle de service et décomposés et mis dans l'étui occupente une surface réduite.

10 cm.    5 cm.

Fig 1.

Fig. 2.

Fig. 3.

P.

P

Fig 4.